# FASCICULE DE BREVET EUROPEEN

(11) **EP 1 247 013 B1**
(45) Date de publication et mention de la délivrance du brevet: **22.06.2005**
(21) Numéro de dépôt: 01905852.8
(22) Date de dépôt: 08.01.2001
(51) Int. Cl.: F02D 13/02, F02B 23/10

(54) **MOTEUR A COMBUSTION INTERNE A INJECTION DIRECTE A SOUPAPES COMMANDEES**
DIREKTEINGESPRITZTE BRENNKRAFTMASCHINE MIT VENTILSTEUERUNG
INTERNAL COMBUSTION ENGINE WITH CONTROLLED VALVES

(30) Priorité: 10.01.2000 FR 0000232
(43) Date de publication de la demande: 09.10.2002
(73) Titulaire: MAGNETI MARELLI FRANCE, 92000 Nanterre (FR)
(72) Inventeur: PONTOPPIDAN, Michael, F-92700 Colombes (FR)
(74) Mandataire: Bérogin, Francis
(86) Numéro de dépôt international: PCT/FR2001/000042
(87) Numéro de publication internationale: WO 2001/051790

(56) Documents cités:
- EP-A- 0 854 280
- DE-A- 19 810 466
- PATENT ABSTRACTS OF JAPAN vol. 2000, no. 03, 30 mars 2000 (2000-03-30) & JP 11 351012 A (NISSAN MOTOR CO LTD), 21 décembre 1999 (1999-12-21)
- PATENT ABSTRACTS OF JAPAN vol. 1998, no. 05, 30 avril 1998 (1998-04-30) & JP 10 008967 A (NISSAN MOTOR CO LTD), 13 janvier 1998 (1998-01-13)
- PATENT ABSTRACTS OF JAPAN vol. 1999, no. 03, 31 mars 1999 (1999-03-31) & JP 10 317979 A (NISSAN MOTOR CO LTD), 2 décembre 1998 (1998-12-02)

## Description

La présente invention est relative à un moteur à combustion interne à injection directe.

Plus particulièrement, l'invention est relative aux moteurs comprenant un vilebrequin et au moins deux cylindres, dans chaque cylindre se déplace un piston qui est associé à au moins deux soupapes d'admission, chacune placée dans un conduit d'admission, et à au moins une soupape d'échappement.

Dans les moteurs à injection directe habituellement rencontrés, le mélange air/carburant est préparé de manière à favoriser une baisse de la consommation du carburant et des émissions de CO2. Pour cela, il est connu de réaliser des têtes de piston profilées. Toutefois, ceci peut être insuffisant pour les moteurs de faibles cylindrées dans la mesure où le parcours moyen du carburant injecté dans les cylindres est très faible, ce qui peut induire des ratés de combustion par manque d'évaporation. Il est alors nécessaire de stabiliser la combustion en brassant le mélange d'air et de carburant.

A cet effet, il est connu de créer des champs de vitesses des gaz à l'intérieur de la chambre de combustion en utilisant des combinaisons de pistons correctement profilés et des dispositifs mécaniques situés en amont des soupapes d'admission. On crée ainsi deux types de champs de vitesses turbulents : l'un des champs de vitesses est dit "rotationnel" ("SWIRL"), c'est-à-dire que les gaz s'écoutent perpendiculairement à l'axe du cylindre tandis que l'autre des champs de vitesses est dit "axial" ("TUMBLE") dans la mesure où les gaz se déplacent parallèlement à l'axe dudit cylindre.

Toutefois, ces dispositifs mécaniques alliés à la forme de la tête du piston, sont coûteux et ne permettent pas d'obtenir à tous les régimes moteur des champs de vitesses axiaux et rotationnels correctement adaptés. De surcroît, les volumes morts créés dans les conduits d'admission dans lesquels sont présents les dispositifs mécaniques, peuvent avoir des effets de reflux du gaz ou du mélange gaz/combustible indésirables.

Pour remédier à ces inconvénients, il a déjà été proposé, notamment par DE 198 10 466, que le déplacement desdites soupapes soit indépendant de la rotation du vilebrequin et commandé par un calculateur, qui commande, cylindre par cylindre, les instants d'ouverture et de fermetures desdites au moins deux soupapes d'admission en tenant compte, notamment, du régime moteur. Mais les moyens de commande nécessaires, selon DE 198 10 466, sont complexes et coûteux.

La présente invention a pour but de pallier ces inconvénients par des moyens à la fois plus simples et plus précis et d'un rendement fluidique supérieur.

A cet effet, selon l'invention, un moteur à combustion interne du type précité et connu par DE 198 10 466 est caractérisé en ce que les conduits d'admission sont conformés pour provoquer un champ de vitesses de l'air à l'intérieur du cylindre parallèle à l'axe de ce cylindre, et en ce que le calculateur commande le mouvement desdites au moins deux soupapes d'admission pour adapter la forme du champ de vitesses de l'air à l'intérieur du cylindre au régime moteur, et créer un champ de vitesses choisi parmi les champs de vitesses parallèles à l'axe du cylindre et rotationnels autour de l'axe du cylindre.

Ainsi, grâce à ces dispositions, il est possible de contrôler à tout instant le champ de vitesses à l'intérieur du cylindre grâce à la commande électronique des soupapes.

Dans des modes de réalisation préférés de l'invention, on peut éventuellement avoir recours en outre à rune et/ou à l'autre des dispositions suivantes :
- le moteur est un moteur à allumage commandé ;
- la forme de la tête du piston est profilée pour provoquer, lors du mouvement du piston, l'un des mouvements axial et rotationnel du champ de vitesses de l'air ;
- le calculateur commande la vitesse de déplacement de chaque soupape d'admission;
- le calculateur contrôle les soupapes d'admission pour provoquer un champ de vitesses rotationnel lors du fonctionnement à charge réduite du moteur et un champ de vitesses axial lors du fonctionnement à charge élevée du moteur;
- le calculateur contrôle les soupapes d'admission pour obtenir une transition continue de l'un des champs de vitesse axial et rotationnel vers l'autre des champs de vitesses axial et rotationnel ; et
- le calculateur contrôle les instants d'ouverture et de fermeture de ladite au moins une soupape d'échappement.

D'autres caractéristiques et avantages de l'invention apparaîtront au cours de la description suivante de l'une de ses formes de réalisation, donnée à titre d'exemple non limitatif, en regard des dessins annexés sur lesquels:
- la figure 1 est une vue schématique d'un cylindre d'un moteur à combustion interne à injection directe, muni de deux soupapes d'admission et de deux soupapes d'échappement qui sont commandées par un calculateur ;
- les figures 2a et 2b sont des graphes montrant respectivement les mouvements synchronisés des soupapes d'admission selon l'art antérieur ;
- les figures 3a et 3b montrent respectivement le mouvement des soupapes d'admission selon la présente invention pour obtenir un champ du type TUMBLE, avec des conduits d'aspiration conçus d'origine pour procurer ce type d'écoulement ;
- les figures 4a et 4b montrent respectivement le mouvement des soupapes d'admission selon la présente invention pour obtenir un champ du type SWIRL ; et
- les figures 5a et 5b montrent le mouvement des soupapes d'admission selon la présente invention pour passer de manière continue d'un champ du type SWIRL à un champ du type TUMBLE.

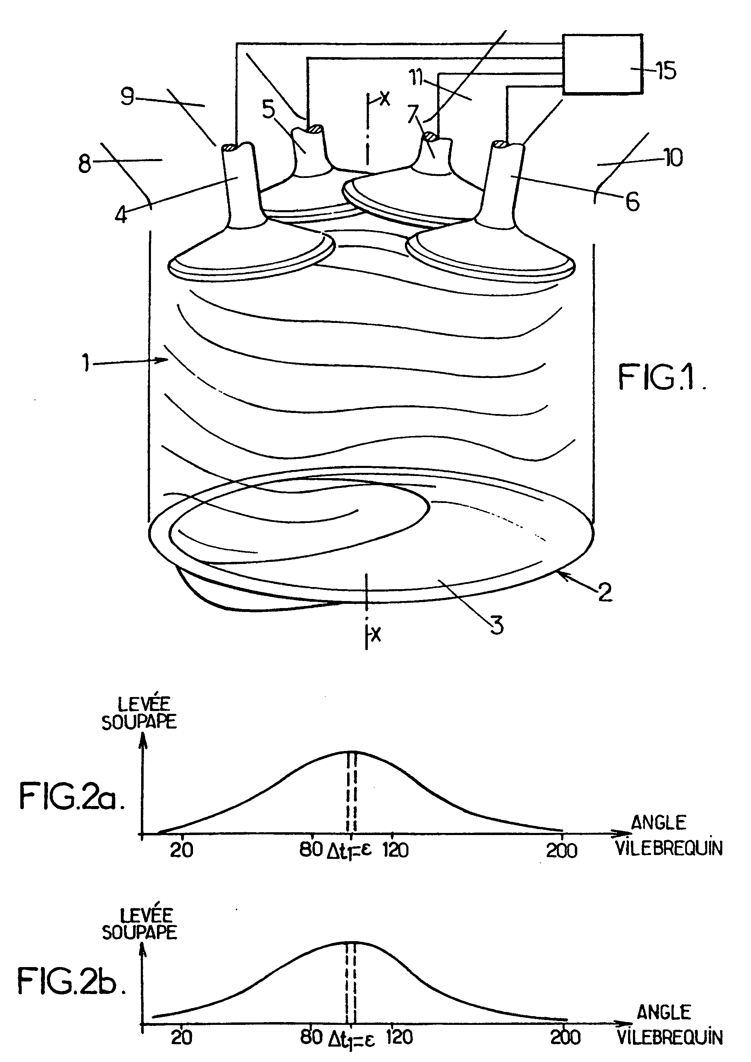

La figure 1 représente schématiquement l'un des cylindres 1 d'un moteur à combustion interne à injection directe. Ce moteur est de préférence à allumage commandé.

Dans ce cylindre 1 se déplace un piston 2 qui possède une tête 3 en vis-à-vis de laquelle sont situées deux soupapes d'admission 4 et 5 ainsi que deux soupapes d'échappement 6 et 7. Chacune des soupapes d'admission 4 et 5 est placée dans l'un respectivement des conduits d'admission 8 et 9, et les soupapes d'échappement 6,7 sont respectivement placées dans des conduits d'échappement 10,11.

Afin d'injecter du carburant à l'intérieur du cylindre 1, un injecteur (non représenté) est positionné, de manière connue en soi, au dessus de la tête 3 du piston 2. Ce carburant se mélange avec l'air admis par les soupapes d'admission 4 et 5.

Les soupapes d'admission 4 et 5 sont par exemple des soupapes électromagnétiques dont l'ouverture et la fermeture sont commandées, selon la présente invention, par un calculateur 15 de contrôle moteur. Ce calculateur commande par ailleurs l'injecteur et l'allumage. Les soupapes 4 et 5 sont par exemple du type décrit dans le document WO 99/06677.

Le piston 2 se déplace alternativement verticalement selon l'axe X-X du cylindre 1. Sa tête 3 est de forme profilée pour provoquer, entre autre, dans la mesure du possible selon ses caractéristiques, des champs de vitesses de formes différentes à l'intérieur du cylindre 1 selon le régime moteur et la charge moteur. La tête 3 du piston 2 est par exemple celle décrite dans le document FR 98 10293.

Typiquement, afin de brasser le mélange air/carburant, deux types de champ de vitesses sont créés. Un premier champ est appelé champ de vitesses "axial" ou "TUMBLE" dans lequel les gaz se déplacent parallèlement à l'axe X-X du cylindre 1, et un deuxième champ de vitesses est appelé "champ rotationnel" ou "SWIRL" dans lequel les gaz se déplacent perpendiculairement à l'axe X-X du cylindre 1.

En particulier le champ de vitesses SWIRL est créé lorsque la charge du moteur est faible et le champ de vitesses TUMBLE est crée lorsque la charge du moteur est élevée.

Selon la présente invention, les formes des parties constitutives du moteur, et notamment les formes des conduits d'admission 8, 9, sont adaptées pour obtenir, par construction, un champ de vitesses TUMBLE.

Le passage du champ de vitesses TUMBLE au champ de vitesses SWIRL et inversement, est obtenu, selon la présente invention, par la commande électronique des soupapes d'admission 4 et 5. Celles-ci ne sont pas reliées à un vilebrequin du moteur de sorte qu'elles peuvent être commandées indépendamment l'une de l'autre et indépendamment du cycle moteur.

Les figures 2a et 2b montrent respectivement que le mouvement des soupapes d'admission 4, 5 de l'art antérieur est lié à l'angle de rotation du vilebrequin du moteur. Les soupapes ont donc un mouvement qui ne peut pas être commandé indépendamment du cycle moteur de sorte que le mouvement des soupapes ne permet pas de modifier le champ de vitesses, notamment la durée de pleine ouverture Δt1 est très faible et non variable.

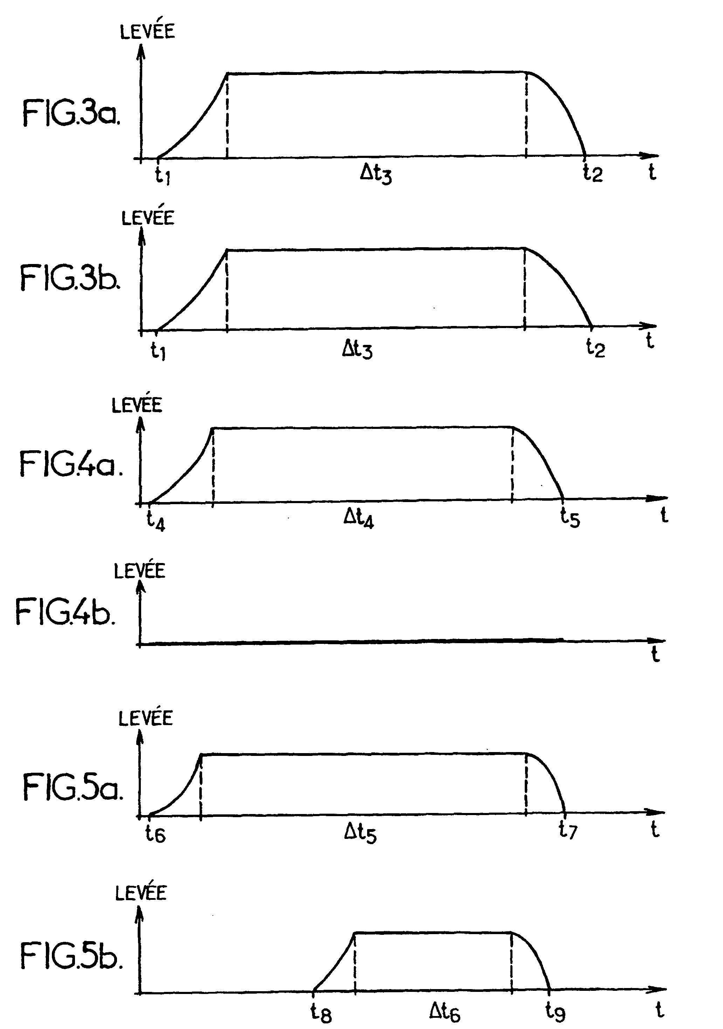

Au contraire, selon la présente invention, les figures 3a à 5b montrent que la commande électronique des soupapes d'admission 4, 5 rend le mouvement de ces soupapes indépendant de celui du vilebrequin et permet de modifier ou ne pas modifier de façon volontaire, le champ de vitesses selon le régime et la charge moteur.

Ainsi, en provoquant l'ouverture et la fermeture des soupapes d'admission 4, 5 sensiblement simultanément respectivement aux instants t1 et t2 comme cela est représenté aux figures 3a et 3b, le calculateur 15 permet de ne pas modifier le champ du type TUMBLE créé par la forme des parties constitutives du moteur.

Le calculateur permet en outre de contrôler la durée d'ouverture Δt3 des soupapes d'admission 4, 5 pour obtenir un effet TUMBLE maximum.

La commande électronique permet de plus de commander la vitesse d'ouverture et la vitesse de fermeture des soupapes d'admission 4, 5 pour obtenir une modification plus ou moins rapide du champ de vitesses. La vitesse d'ouverture peut notamment être différente de la vitesse de fermeture.

Lorsque la charge du moteur devient réduite, il est nécessaire de stabiliser la combustion, en créant un champ de vitesse rotationnel (SWIRL) élevé.

Selon la présente invention, ce champ SWIRL est obtenu par la commande électronique ces soupapes d'admission 4, 5. Pour obtenir un effet SWIRL maximum, le calculateur commande à l'ouverture en un instant t4 l'une 4 des deux soupapes d'admission 4,5 et maintient fermée l'autre soupape d'admission 5, comme cela est schématisé aux figures 4a et 4b. La durée d'ouverture Δt4 est également contrôlée.

De plus, la commande électronique des instants d'ouverture et de fermeture de chacune de ces soupapes d'admission 4, 5, permet de passer de l'un de ces champs à l'autre des champs de manière continue.

Par exemple, aux figures 5a et 5b est représentée la commande des soupapes 4, 5 pour passer du champ SWIRL au champ TUMBLE. L'ouverture de la deuxième soupape d'admission 5 en un instant t8 est postérieure à l'ouverture de la première soupape d'admission 4 en instant t6, tandis que ces deux soupapes 4, 5 sont fermées quasi simultanément aux instants voisins t7 et t9. Les durées respectives d'ouverture Δt5 et Δt6 ne sont donc pas égales.

Grâce à la commande électronique des soupapes 4, 5, il est ainsi possible de stabiliser un champ de vitesses hautement turbulent (SWIRL ou TUMBLE) de façon à permettre la combustion d'un mélange air/essence extrêmement pauvre et ainsi réduire la consommation de carburant sans nécessiter la présence de dispositifs mécaniques peu précis dans les conduits d'admission, en amont des soupapes d'admission. Notamment, les conduits d'admission sont d'un dessin simplifié favorisant l'effet TUMBLE (conduits d'admission droits) et provoquant une perte de charge minimale du flux traversant.

Par ailleurs, les soupapes d'échappement 6 et 7 sont également pilotées électroniquement. Ainsi, outre les modes de fonctionnement connus, c'est-à-dire, le balayage (évacuation des gaz du cylindre) et l'EGR interne (recirculation des gaz d'échappement), il est possible de stabiliser la température de la chambre de combustion pour favoriser l'évaporation du jet de carburant. A cet effet, on module les lois de balayage et d'EGR interne par la commande des instants d'ouverture et de fermeture des soupapes d'échappement 6 et 7 pour faire recirculer une quantité de gaz d'échappement supplémentaire et nécessaire pour stabiliser la température moyenne dans la chambre de combustion à une valeur appropriée. Ceci est particulièrement intéressant lorsque la charge est réduite puisque la température est alors naturellement basse.

On comprend que la commande électronique des soupapes d'admission 4, 5 et d'échappement 6, 7 peut en outre être réalisée de manière indépendante pour chaque cylindre 1 du moteur pour stabiliser au mieux la combustion. Lors de la mise au point du moteur, les paramètres de contrôle des soupapes qui sont élaborés pour chaque cylindre en fonction du point de fonctionnement du moteur f(n,q), où n est le régime moteur et q est la charge, sont implantés dans des mémoires cartographique dans le calculateur 15 de contrôle moteur.

## Revendications

1. Moteur à combustion interne à injection directe comprenant un vilebrequin et au moins deux cylindres (1), dans chaque cylindre (1) se déplace un piston (2) qui est associé à au moins deux soupapes d'admission (4, 5), chacune placée dans un conduit d'admission (8, 9), et à au moins une soupape d'échappement (6, 7), le déplacement desdites soupapes (4, 5, 6, 7) étant indépendant de la rotation du vilebrequin et commandé par un calculateur (15), qui commande, cylindre par cylindre, les instants d'ouverture et de fermeture desdites au moins deux soupapes d'admission (4, 5) en tenant compte du régime moteur, **caractérisé en ce que** les conduits d'admission (8, 9) sont conformés pour provoquer un champ de vitesses de l'air à l'intérieur du cylindre parallèle à l'axe (X-X) de ce cylindre (1), ledit calculateur (15) commande le mouvement desdites au moins deux soupapes d'admission (4, 5) pour adapter la forme du champ de vitesses de l'air à l'intérieur du cylindre (1) au régime moteur, et créer un champ de vitesses choisi parmi les champs de vitesses parallèles à l'axe (X-X) du cylindre (1) et rotationnels autour de l'axe (X-X) du cylindre (1).

2. Moteur selon la revendication 1, **caractérisé en ce que** le moteur est un moteur à allumage commandé.

3. Moteur selon l'une des revendications 1 et 2, **caractérisé en ce que** la forme de la tête (3) du piston (2) est profilée pour provoquer, lors du mouvement du piston (2), l'un des mouvements axial et rotationnel du champ de vitesses de l'air.

4. Moteur selon l'une quelconque des revendications 1 à 3, **caractérisé en ce que** le calculateur (15) commande la vitesse de déplacement de chaque soupape d'admission (4, 5).

5. Moteur selon l'une quelconque des revendications 1 à 4, **caractérisé en ce que** le calculateur (15) contrôle lesdites soupapes d'admission (4, 5) pour provoquer un champ de vitesses rotationnel lors du fonctionnement à charge réduite du moteur et un champ de vitesses axial lors du fonctionnement à charge élevée du moteur.

6. Moteur selon l'une quelconque des revendications 1 à 5, **caractérisé en ce que** le calculateur (15) contrôle lesdites soupapes d'admission (4, 5) pour obtenir une transition continue de l'un des champs de vitesse axial et rotationnel vers l'autre des champs de vitesses axial et rotationnel.

7. Moteur selon l'une quelconque des revendications 1 à 6, **caractérisé en ce que** le calculateur (15) contrôle les instants d'ouverture et de fermeture de ladite au moins une soupape d'échappement (6, 7).

## Patentansprüche

1. Verbrennungsmotor mit Direkteinspritzung, mit einer Kurbelwelle und wenigstens zwei Zylindern (1), wobei sich in jedem Zylinder (1) ein Kolben (2) verschiebt, der mit wenigstens zwei Einlassventilen (4, 5), die beide in einem Einlasskanal (8, 9) angeordnet sind, und mit wenigstens einem Auslassventil (6, 7) verbunden ist, wobei die Verstellung der Ventile (4, 5, 6, 7) unabhängig von der Drehung der Kurbelwelle ist und durch einen Rechner (15) gesteuert wird, der die Öffnungs- und Schließmomente der wenigstens zwei Einlassventile (4, 5) unter Berücksichtigung der Motordrehzahl zylinderweise steuert, **dadurch gekennzeichnet, dass** die Einlasskanäle (8, 9) so ausgebildet sind, dass ein Luft-Geschwindigkeitsfeld im Inneren des Zylinders parallel zur Achse (X-X) dieses Zylinders (1) ausgelöst wird, wobei der Rechner (15) die Bewegung dieser wenigstens zwei Einlassventile (4, 5) so steuert, dass die Form des Luft-Geschwindigkeitsfeldes im Inneren des Zylinders (1) an die Motordrehzahl angepasst ist, und dass ein Geschwindigkeitsfeld erzeugt wird, ausgewählt aus den Geschwindigkeitsfeldern parallel zu der Achse (X-X) des Zylinders (1) und rotierend um die Achse (X-X) des Zylinders (1).

2. Motor nach Anspruch 1, **dadurch gekennzeichnet, dass** der Motor ein Motor mit Fremdzündung ist.

3. Motor nach einem der Ansprüche 1 und 2, **dadurch gekennzeichnet, dass** die Form des Kopfes (3) des Kolbens (2) so profiliert ist, dass dieser bei der Bewegung des Kolbens (2) axiale und rotierende Bewegungen des Geschwindigkeitsfeldes von Luft auslöst.

4. Motor nach einem der Ansprüche 1 bis 3, **dadurch gekennzeichnet, dass** der Rechner (15) die Verstellgeschwindigkeit jedes Einlassventils (4, 5) steuert.

5. Motor nach einem der Ansprüche 1 bis 4, **dadurch gekennzeichnet, dass** der Rechner (15) die Einlassventile (4, 5) so steuert, dass bei der Betriebsweise mit reduzierter Motorlast ein rotierendes Geschwindigkeitsfeld und bei der Betriebsweise mit erhöhter Motorlast ein axiales Geschwindigkeitsfeld ausgelöst wird.

6. Motor nach einem der Ansprüche 1 bis 5, **dadurch gekennzeichnet, dass** der Rechner (15) die Einlassventile (4, 5) so steuert, dass ein kontinuierlicher Übergang von einem der axialen und rotierenden Geschwindigkeitsfelder zu einem anderen axialen und rotierendem Geschwindigkeitsfeld erhalten wird.

7. Motor nach einem der Ansprüche 1 bis 6, **dadurch gekennzeichnet, dass** der Rechner (15) die Öffnungs- und Schließmomente des wenigstens einen Auslassventils (6, 7) steuert.

## Claims

1. A direct-injection internal combustion engine comprising a crankshaft and at least two cylinders (1); in each cylinder (1) there moves a piston (2) which is associated with at least two inlet valves (4, 5), each placed in an induction pipe (8, 9), and with at least one exhaust valve (6, 7), the movement of said valves (4, 5, 6, 7) being independent of the rotation of the crankshaft and controlled by a computer (15) which, cylinder by cylinder, controls the opening and closing times of said at least two inlet valves (4, 5) taking engine speed into account, **characterized in that** the induction pipes (8, 9) are shaped to give rise to a field of air velocities inside the cylinder which is parallel to the axis (X-X) of this cylinder (1), said computer (15) controls the movement of said at least two inlet valves (4, 5) to adapt the shape of the air velocity field inside the cylinder (1) to the engine speed, and to create a velocity field chosen from velocity fields parallel to the axis (X-X) of the cylinder (1) and ones which swirl around the axis (X-X) of the cylinder (1).

2. The engine as claimed in claim 1, **characterized in that** the engine is a controlled-ignition engine.

3. The engine as claimed in either of claims 1 and 2, **characterized in that** the shape of the crown (3) of the piston (2) is shaped so that as the piston (2) moves, it causes the air velocity field either to be axial tumbling or to swirl.

4. The engine as claimed in any of claims 1 to 3, **characterized in that** the computer (15) controls the speed of travel of each inlet valve (4, 5).

5. The engine as claimed in any of claims 1 to 4, **characterized in that** the computer (15) controls said inlet valves (4, 5) to give rise to a swirling velocity field when the engine is operating at light load and an axial tumbling velocity field when the engine is running at heavy load.

6. The engine as claimed in any of claims 1 to 5, **characterized in that** the computer (15) controls said inlet valves (4, 5) so as to obtain a continuous transition between one of the velocity fields - axial tumbling and swirling and the other of the velocity fields - swirling and axial tumbling.

7. The engine as claimed in any of claims 1 to 6, **characterized in that** the computer (15) controls the opening and closing times of said at least one exhaust valve (6, 7).
